# EUROPÄISCHE PATENTSCHRIFT

(11) **EP 3 533 684 B1**
(45) Veröffentlichungstag und Bekanntmachung des Hinweises auf die Patenterteilung: **10.04.2024**
(21) Anmeldenummer: 19160000.6
(22) Anmeldetag: 28.02.2019
(51) Int. Cl.: B62B 3/14

(54) **TRANSPORTWAGEN**
TRANSPORT TROLLEY
CHARIOT DE TRANSPORT

(30) Priorität: 01.03.2018 DE 102018104686
(43) Veröffentlichungstag der Anmeldung: 04.09.2019
(73) Patentinhaber: Wanzl GmbH & Co. KGaA, 89340 Leipheim (DE)
(72) Erfinder: Daminger, Johann, 89223 Neu-Ulm, Burlafingen (DE); Müller, Gerhard, 89343 Jettingen-Scheppach (DE); Riesenegger, Markus, 89358 Kammeltal (DE); Thalhofer, Armin, 89312 Günzburg (DE)

(56) Entgegenhaltungen:
- EP-B1- 1 562 816
- DE-A1- 2 818 634
- US-A- 2 890 057
- US-A- 2 997 311
- US-A- 5 348 323

## Beschreibung

Die Erfindung betrifft einen stapelbaren Transportwagen mit einem zur Aufnahme von Ware bestimmten Korb mit einer in das Korbinnere schwenkbaren Klappe, die ein Klappenvorderteil mit Beinöffnungen für einen Kindersitz und eine Sitzklappe und ein mittels Scharniergelenken um eine Achse am Klappenvorderteil schwenkbar gelagerten Klappenrückenteil aufweist, die in der nicht in das Korbinnere geschwenkten Position beweglich sind zwischen einer Stauposition und einer Sitzposition, in welcher Bereiche des Klappenrückenteils eine Rückenlehne, und Bereiche der Sitzklappe eine Sitzfläche eines Kindersitzes bilden.

Stapelbare Transportwagen, zum Beispiel Einkaufswagen für den Transport von Ware beim Einkauf durch einen Kunden in einem Supermarkt, sind aus dem Stand der Technik bekannt. Sie weisen einen Korb zur Aufnahme von Ware auf und, zum Beispiel unterhalb eines Griffs zum Schieben des Wagens an der Rückseite des Korbes, eine in das Korbinnere schwenkbare Klappe zum Stapeln des Transportwagens.

Eine solche Klappe ist beispielsweise in der EP 1 562 816 B1 beschrieben. Die Sitzklappe weist dort zum Sichern am Klappenvorderteil so genannte Stützfinger auf; und das Klappenrückenteil ist mit Erweiterungen versehen, so dass die Sitzklappe in verbesserter Weise am Klappenvorderteil montiert werden kann.

Auch ist aus dem Stand der Technik zum Beispiel aus der EP 0 570 737 B1 eine Abdeckung oder Warenfachklappe bekannt, die drehbar am Klappenvorderteil angeordnet und derart ausgeführt ist, dass sie die Beinöffnungen des Klappenvorderteils verdecken kann. Auch die DE 43 42 255 A1 zeigt eine solche Warenfachklappe, oder auch die DE 28 18 634 A1. Darin ist ein durchsichtiges Kunststofffenster zum Anbringen von Werbematerial im Klappenrückenteil vorgesehen.

Die DE 10 2012 102568 zeigt eine solche Warenfachklappe aus transparentem Material oder mit Öffnungen, um das "Schmuggeln" darunter von Ware durch die Kasse zu erschweren.

Die US 2 890 057 A zeigt ebenfalls einen stapelbaren Transportwagen mit einem Korb und mit einer in das Korbinnere schwenkbaren Korbklappe. Es ist weiterhin ein Klappenrückenteil zur Anordnung eines Kindersitzes vorgesehen. Das Klappenrückenteil ist mittels Scharniergelenken mit der Korbklappe bzw. dem Klappenvorderteil verbunden. Das Scharniergelenk verbindet insbesondere die beiden untersten Drähte der beiden Klappenteile, Klappenrückenteil und Klappenvorderteil.

Weiterhin ist aus der US 2 997 311 A ein Transportwagen mit einem Korb bekannt, der eine Sitzvorrichtung für ein Kind aufweist. Hierbei findet ebenfalls ein Klappenrückenteil und eine Korbklappe Verwendung, die beide durch ein Scharniergelenk verbunden sind. Das Scharniergelenk ist hierbei aus den beiden Bauteilen Klappenrückenteil und Korbklappe selbst geformt. Beide Teile greifen ineinander und ermöglichen den gewünschten Schwenkbereich des Klappenrückenteils zur Verwendung des Kindersitzes.

Dies alles sind mögliche Ausgestaltungen.

Die Montage der Klappenelemente und insbesondere die Montage der Scharniergelenke des schwenkbar gelagerten Klappenrückenteils auf der Achse am Klappenvorderteil haben sich in herkömmlicher Verbindungstechnik als aufwändig erwiesen. Je nach Ausgestaltung der jeweiligen Elemente müssen bekanntlich Drähte gebogen und/oder Lagerelemente geschraubt werden.

Die Aufgabe der vorliegenden Erfindung liegt nun darin, einen stapelbaren Transportwagen zu schaffen, der in seiner Herstellung vereinfacht ist.

Diese Aufgabe wird von einem Transportwagen mit den Merkmalen von Anspruch 1 gelöst. Weitere Ausgestaltungen sind in den Unteransprüchen angegeben.

Ein erfindungsgemäßer stapelbarer Transportwagen hat einen (insbesondere zur Aufnahme von Ware bestimmten) Korb mit einer in das Korbinnere schwenkbaren Korbklappe (insbesondere um gleichartige Transportwagen dort hindurch in den Transportwagen zu schieben und so zu stapeln). Die Kopfklappe weist ein Klappenvorderteil mit Beinöffnungen für einen Kindersitz und eine Sitzklappe und ein mittels Scharniergelenken um eine Achse am Klappenvorderteil schwenkbar gelagerten Klappenrückenteil auf. Das Klappenvorderteil, die Sitzklappe und das Klappenrückenteil sind (in der nicht in das Korbinnere geschwenkten Position) beweglich zwischen einer Stauposition und einer Sitzposition. In der Sitzposition bilden (im Wesentlichen ebene) Bereiche des Klappenrückenteils eine Rückenlehne, und (im Wesentlichen ebene) Bereiche der Sitzklappe bilden eine Sitzfläche eines Kindersitzes.

Erfindungsgemäß nun lässt sich (insbesondere zur Montage der Scharniergelenke) das Klappenrückenteil auf die Achse am Klappenvorderteil schnappen. Dies wird erfindungsgemäß vorzugsweise dadurch möglich, dass im Bereich der Scharniergelenke am Klappenrückenteil jeweils mindestens eine gerade Nut ausgebildet ist, und zwar mit einer Weite der Nut, die etwas größer ist als der Durchmesser der Achse, auf die das Scharniergelenk aufgeschnappt werden soll - und dass die Nut jeweils mindestens bereichsweise von einer Schnappspange überdacht ist. Diese Elemente sind so angeordnet und dimensioniert, dass sich die Achse in die jeweilige Nut hinein senken lässt vorbei an der Spange, die dabei zur Seite schnappt. Die Spange ist dabei so orientiert und ausgebildet, dass sie diesem hinein Senken der Achse ausweicht, die Bewegung der Achse in die Gegenrichtung aber arretiert - die Achse also in der Nut gesichert ist und also darin drehbar wie in einer Scharniergelenk-Hülse.

Vorzugsweise hat der erfindungsgemäße Transportwagen eine "Warenfachklappe" (nämlich zur Abdeckung der Beinöffnungen, um dort ein Warenfach zu bilden), die in der nicht in das Korbinnere geschwenkten Position der Korbklappe gegen das Klappenvorderteil beweglich ist und dort die Beinöffnungen verdeckt. So entsteht dort eine zusätzliche Warenablage.

Vorzugsweise sind das Klappenrückenteil und/oder die Sitzklappe und/oder die Warenfachklappe aus Kunststoff hergestellt, und zwar zum Beispiel im Spritzgussverfahren mit zum Beispiel eingespritzten Verstärkungen aus Metall und/oder Verstärkungsrippen, die im Spritzguss einstückig angeformt sind. Das Klappenvorderteil ist vorzugsweise aus Stahldraht hergestellt

Das Klappenrückenteil hat vorzugsweise eine Versteifungssicke entlang seinem oberen Rand, der dort nach oben emporragen kann und so dann eine nach oben verlängerte und gegen Bruch verstärkte Rückenlehne für den Kindersitz bildet. Auch weist das Klappenrückenteil vorzugsweise zwei Bohrungen (oder Konturen, insbesondere Durchbrüche, anderer Gestalt) auf, die zur Befestigung eines Kindersitz-Sicherheitsgurtes dienen können.

Weitere vorteilhafte Ausführungen sind in den übrigen Unteransprüchen beschrieben.

Diese und andere Merkmale und Vorteile der Erfindung werden mit Bezug auf die beigefügten Abbildungen beschrieben. Darin zeigen
- Figur 1: eine räumliche Ansicht eines erfindungsgemäßen Transportwagens mit Korbklappe in Sitzposition,
- Figur 2: eine räumliche Ansicht eines erfindungsgemäßen Scharniergelenks als Ausschnitt aus Figur 1,
- Figur 3: eine andere räumliche Ansicht des erfindungsgemäßen Scharniergelenks,
- Figur 4: eine geschnittene Seitenansicht des erfindungsgemäßen Scharniergelenks und
- Figur 5: die geschnittene Seitenansicht des erfindungsgemäßen Scharniergelenks mit der Korbklappe in Stauposition,

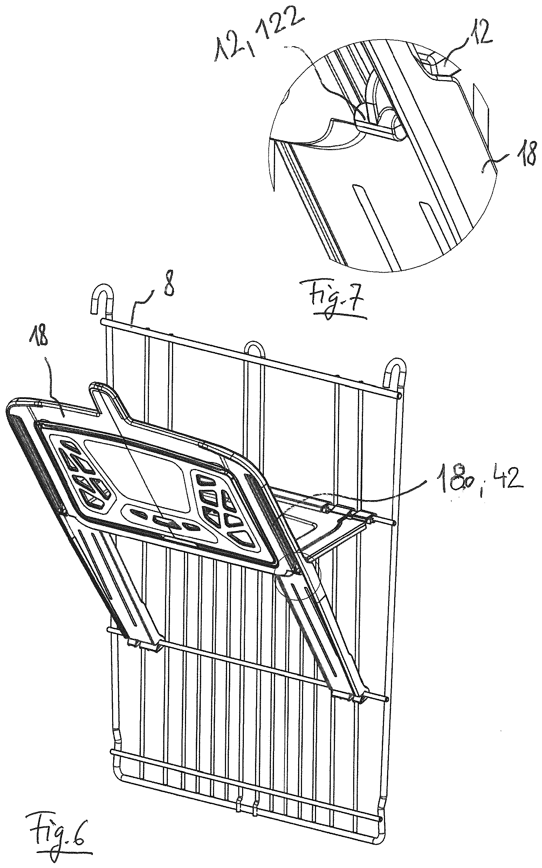

- Figur 6: eine weitere Ausführungsform einer Korbklappe in perspektivischer Ansicht,
- Figur 7: ein Detail dieser Korbklappe,
- Figur 8: die Korbklappe mit hochgeklappter Warenfachklappe,
- Figur 9: eine weitere Darstellung der Korbklappe,
- Figur 10: eine Detaildarstellung von Sitzklappe und Warenfachklappe,
- Figur 11: eine Darstellung der Korbklappe mit einem Magneten,
- Figur 12: eine Detaildarstellung zur Position des Magneten,
- Figur 13: eine weitere perspektivische Darstellung der geöffneten Korbklappe,
- Figur 14: eine Draufsicht auf die geöffnete Korbklappe,
- Figur 15: eine weitere Draufsicht auf die geöffnete Korbklappe,
- Figur 16: eine Seitenansicht mit geöffneter Korbklappe,
- Figur 17: eine Detaildarstellung des Klappenrückenteils und der Sitzklappe,
- Figur 18: eine weitere Detaildarstellung des Klappenvorderteils und des Scharniergelenks,
- Figur 19 bis 22: Darstellungen zur Warenfachklappe
- Figur 23 bis 26: Darstellungen zur Sitzklappe
- Figur 27: ein Klappenrückenteil in Frontansicht,
- Figur 28: ein Klappenrückenteil im Schnitt,
- Figur 29: ein möglicher Verbindungsbereich zweier Materialien,
- Figur 30: nochmals ein Klappenrückenteil in Frontansicht,
- Figur 31: nochmals ein Klappenrückenteil im Schnitt,
- Figur 32: Detail D des Schnittes,
- Figur 33: Detail C des Schnittes sowie
- Figur 34: Detail B des Schnittes.

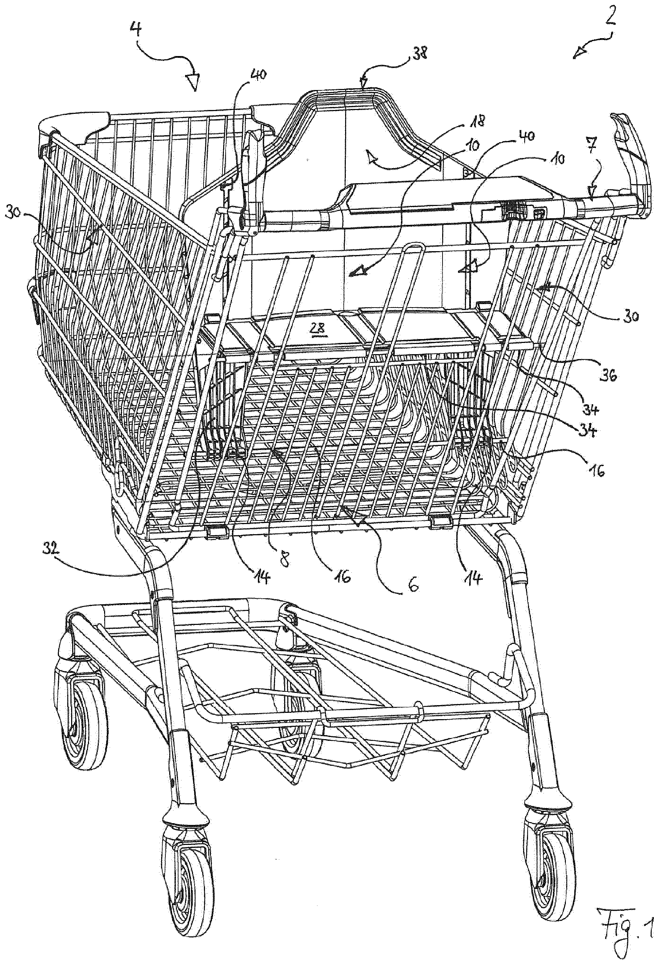

Figur 1 zeigt einen stapelbaren Transportwagen 2. Dieser hat einen zur Aufnahme von Ware (nicht dargestellt) bestimmten Korb 4 mit einer in das Korbinnere schwenkbaren Korbklappe 6 unterhalb eines Griffs 7 zum Schieben des Wagens 2 an der Rückseite des Korbes 4 zum Schieben des Wagens 2. Sie dient insbesondere dazu, gleichartige Transportwagen (nicht dargestellt) dort hindurch in den Transportwagen zu schieben und so diese alle zu stapeln. Die Kopfklappe 6 weist ein Klappenvorderteil 8 mit Beinöffnungen 10 für einen Kindersitz und eine Sitzklappe 12 und ein mittels Scharniergelenken 14 um eine Achse 16 am Klappenvorderteil 8 schwenkbar gelagertes Klappenrückenteil 18 auf. Das Klappenvorderteil 8, die Sitzklappe 12 und das Klappenrückenteil 18 sind (in der nicht in das Korbinnere geschwenkten Position) beweglich zwischen einer Sitzposition (Figur 1) und einer Stauposition, in der die Sitzklappe 12 und das Klappenrückenteil 18 im Wesentlichen planparallel auf das Klappenvorderteil 8 (in seiner in Figur 1 dargestellten Position) geklappt sind (nicht dargestellt). In der Sitzposition gemäß Figur 1 bilden (im Wesentlichen ebene) Bereiche des Klappenrückenteils 18 eine Rückenlehne, und (im Wesentlichen ebene) Bereiche der Sitzklappe 12 bilden eine Sitzfläche eines Kindersitzes.

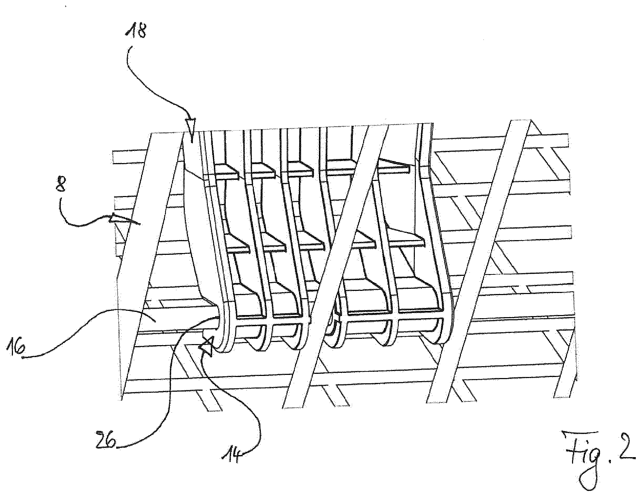

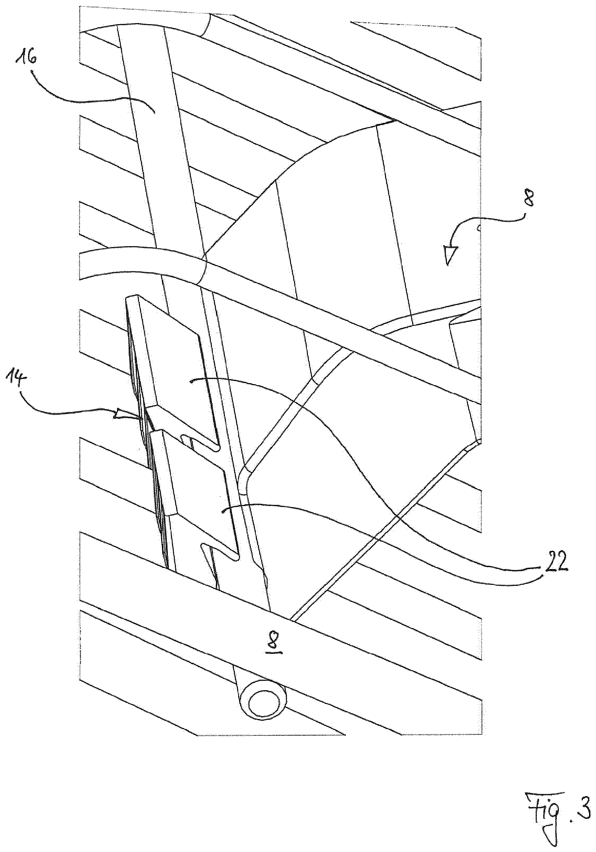

Insbesondere zur Montage der Scharniergelenke 14 lässt sich das Klappenrückenteil 18 auf die Achse 16 am Klappenvorderteil 8 schnappen. Dies wird dadurch möglich, dass im Bereich der Scharniergelenke 14 am Klappenrückenteil 18 jeweils mindestens eine gerade Nut 20 ausgebildet ist (Figur 2 bis 5), und zwar mit einer Weite der Nut 20, die etwas größer ist als der Durchmesser der Achse 16, auf die das Scharniergelenk 14 aufgeschnappt werden soll - und dass die Nut 20 jeweils von einer Schnappspange 22 überdacht ist. Diese Elemente 14, 20, 22 sind so angeordnet und dimensioniert, dass sich die Achse 16 in die jeweilige 20 Nut hinein senken lässt vorbei an der Spange 22, die dabei zur Seite schnappt. Die Spange 22 ist dabei so orientiert und ausgebildet, dass sie diesem hinein Senken der Achse 16 ausweicht, eine Bewegung der Achse 116 in der Gegenrichtung, aus der Nut 20 heraus, aber arretiert - die Achse 16 also in der Nut 20 gesichert ist und also darin drehbar wie in einer Scharniergelenk-Hülse.

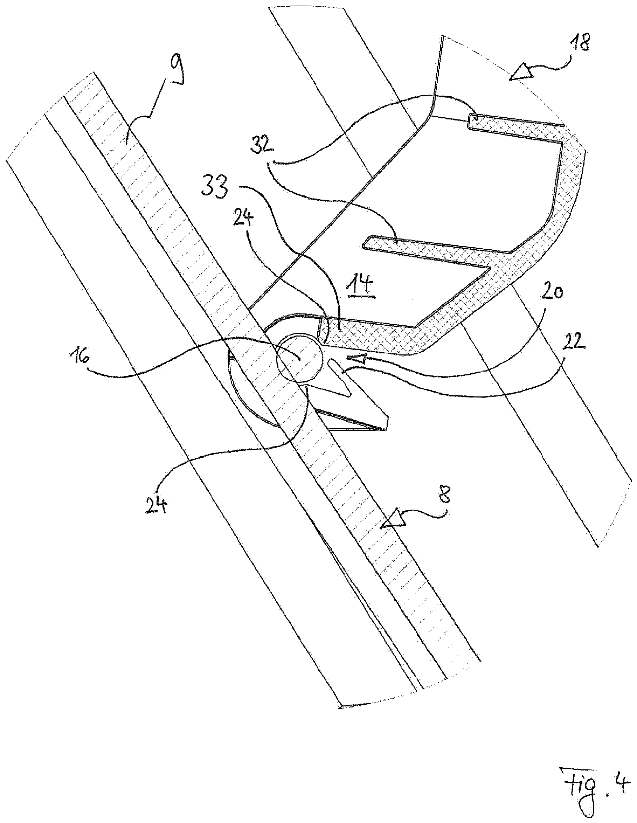

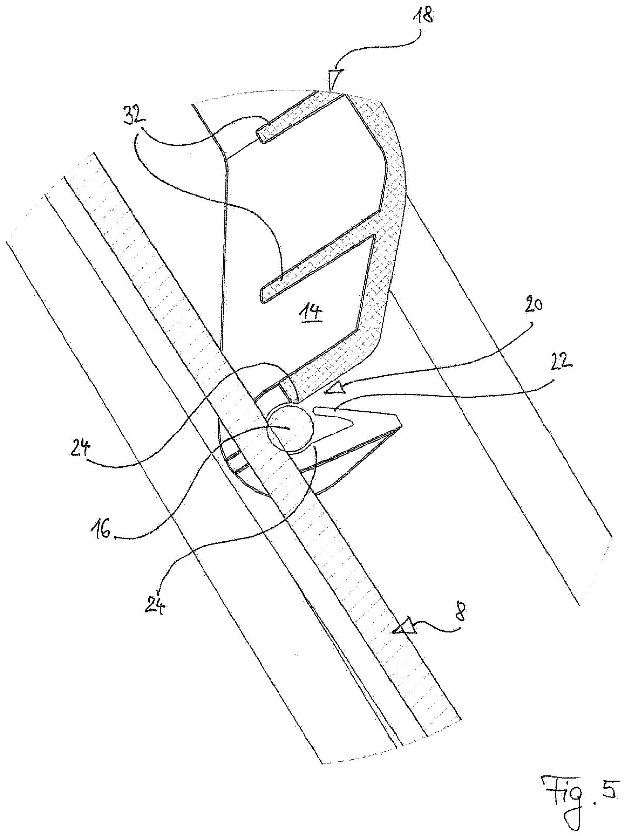

Zusätzlich ist die Achse 16 in der Nut 20 gesichert durch Engstellen 24 am Ausgang der Nut 20: der Querschnitt 26 des Nutgrunds ist nämlich nicht nur halbkreisförmig (mit einem Durchmesser etwas größer als der der Achse 16), sondern beschreibt fast zwei Drittel eines Kreises (Figur 4 und 5) - mit einer Weite zwischen den Enden 24 dieses Kreisabschnitts 26, die etwas kleiner ist als der Durchmesser der Achse 16.

So ist zur Montage der Achse 16 in der Nut 20 zunächst mit der Achse 16 die Schnappspange 22 zu überwinden und dann die Achse durch die Engstellen 24 in den Nutgrund 26 zu drücken - wobei das Scharniergelenk 14 insgesamt so gestaltet ist, dass sich sein Material in seiner Massivität zwar mit erheblicher, aber überwindbarer Verformungskraft elastisch durch das Hineindrücken der Achse 16 aufweiten lässt.

Zusätzlich hat der Transportwagen 2 eine Warenfachklappe 28 (nämlich zur Abdeckung der Beinöffnungen 10, um dort ein Warenfach zu bilden). Sie ist (in der nicht in das Korbinnere geschwenkten Position der Korbklappe 6 gemäß Figur 1) gegen das Klappenvorderteil 8 schwenkbar (nicht dargestellt) und verdeckt dort die Beinöffnungen 10. So entsteht dort eine zusätzliche Warenablage, seitlich begrenzt durch die Seitenwände 30 des Korbes 4, nach vorn (in Fahrtrichtung des Wagens 2) in den Korb 4 hinein durch das Klappenrückenteil 18, nach hinten zum Griff 7 des Wagens 2 durch das Klappenvorderteil 8 und nach unten durch die Sitzklappe 12. Das Klappenrückenteil 18, die Sitzklappe 12 und die Warenfachklappe 28 sind aus Kunststoff hergestellt, und zwar im Spritzgussverfahren. Es können zusätzlich eingespritzte Verstärkungen aus Metall (nicht dargestellt) eingefügt werden. Weiterhin sind Verstärkungsrippen 32, die im Spritzguss einstückig angeformt sind, vorgesehen. Die unterste Verstärkungsrippe 33 steht bei Überlastung des Scharniergelenks 14 auf dem Querdraht 9 des Klappenvorderteils 8 auf und bietet dadurch eine zusätzliche Sicherung der Scharniergelenke 14. Gerade wenn z.B. mehrere Wagen 2 ineinander gestapelt sind, stellt dies einen zusätzlichen Schutz gegen das Lösen des Scharniergelenks 14 dar. Auch bei der Be- oder Entladung solcher Wagen 2 aus einem bzw. in einen LKW kann diese zusätzliche Sicherung vorteilhaft sein.

Das Klappenvorderteil 8 (ebenso wie Wände, Boden und Fahrgestell des Korbes 4 im abgebildeten Beispiel) ist aus Stahldraht hergestellt, der gitterförmig verschweißt und oberflächenbehandelt ist.

Alternativ könnten mindestens einzelne oder einige dieser Elemente des Wagens 2 ebenfalls, auch auf die beschriebene Weise verstärkt, aus Kunststoff gebildet sein.

Auch die Sitzklappe 12 und die Warenfachklappe 28 sind mittels Scharniergelenken 34 um eine Achse 36 am Klappenvorderteil 8 schwenkbar gelagert. Auch zur Montage dieser Scharniergelenke 34 lassen sich die Sitzklappe 12 und die Warenfachklappe 28 sich auf die Achse 36 am Klappenvorderteil 8 schnappen - allerdings nur, indem sie den beschriebenen Engstellen 24 entsprechende Elemente 34 aufweisen und nicht auch welche, die den beschriebenen Spangen 22 entsprechen. Diese wären aber auch hier optional möglich. Dadurch wäre auch ein nachträgliches Anordnen eines Kindersitzes mit Klappenrückenteil 18, Sitzklappe 12 und Warenfachklappe 28 möglich.

Das Klappenrückenteil 18 hat eine Versteifungssicke 38 entlang seinem oberen Rand, der dort nach oben emporragt und so eine nach oben verlängerte und gegen Bruch verstärkte Rückenlehne für den Kindersitz bildet.

Auch weist das Klappenrückenteil 18 zwei Aufnahmen 40 auf, die zur Befestigung eines Kindersitz-Sicherheitsgurtes (nicht dargestellt) dienen. Diese können als Bohrungen oder Konturen, insbesondere Durchbrüche, ausgeführt sein. Vorteilhafterweise sind diese Aufnahmen 40 in Form von zwei D-förmigen Durchbrüchen ausgeführt. Das bietet den Vorteil, dass handelsübliche Sicherheitsgurte am Klappenrückenteil 18 ortsfest oder wechselbar angebracht werden können. Für die Aufnahme des Gurtes, solange dieser nicht benutzt ist, bietet es sich an, diesen in bekannter Art und Weise aus Sicherheitsgründen auf der Rückseite des Klappenrückenteils 18 anzuordnen. Eine kassettenartige Lösung z.B. in rechteckiger Form, teilweise platzsparend eingebracht in das Klappenrückenteil 18, stellt eine mögliche Ausführungsform dar.

Vorzugsweise sind die Aufnahmen 40 im oberen Drittel des Klappenrückenteils 18 vorgesehen. Eine Ausführungsform eines D-förmigen Durchbruchs auf der rechten Seite des Klappenrückenteils 18 und eines spiegelbildlich ausgeführten D-förmigen Durchbruchs auf der linken Seite des Klappenrückenteils 18 hat sich als vorteilhaft erwiesen. Andere Arten von Durchbrüchen sind aber auch denkbar. Bevorzugt weisen die Aufnahmen 40 eine Höhe von ungefähr 40 bis 55 mm bei einer maximal möglichen Breite von ungefähr 20 bis 35 mm auf.

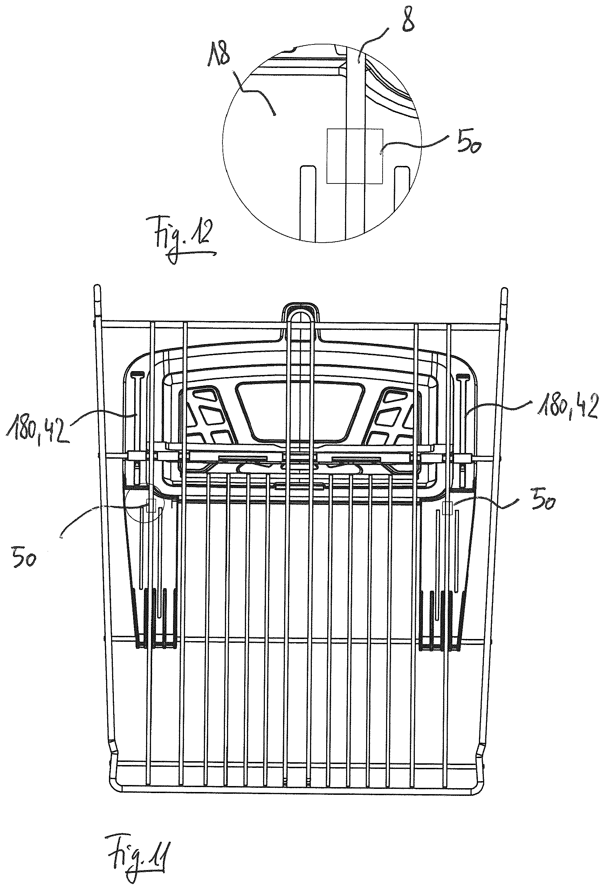

Es hat sich als sinnvoll erwiesen, dass das Klappenrückenteil 18 mit einem oder mehreren Magneten 50 ausgestattet ist. Beim Zusammenklappen des Klappenrückenteils 18 an das Klappenvorderteil 8, das vorzugsweise aus metallischen Drähten hergestellt ist, kann dieses durch die magnetische Anziehungskraft verbessert erfolgen. Ferner kann dadurch ein Zusammenklappen mit einer verringerten Geräuschemission erzielt werden. Es hat sich als sinnvoll erwiesen, dass zwei rechteckige Magnete 50 Einsatz finden. Diese sind, wie exemplarisch in den Figuren 11 und 12 dargestellt, in mittlerer Höhe des Klappenrückenteils 18 und tendenziell eher am Rand des Klappenrückenteils 18 vorgesehen. Andere Positionen sind weiterhin denkbar. Es hat sich als sinnvoll erwiesen, diese direkt im Herstellungsprozess einzubringen. Dadurch können Schäden an den Magneten 50 oder eine mutwillige Demontage der Magnete 50 vermieden werden.

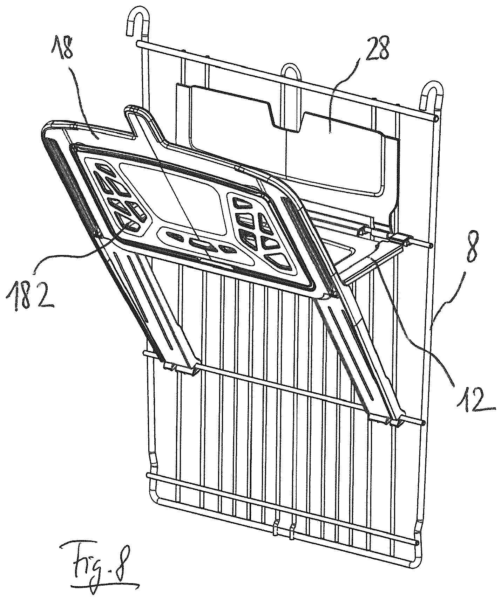

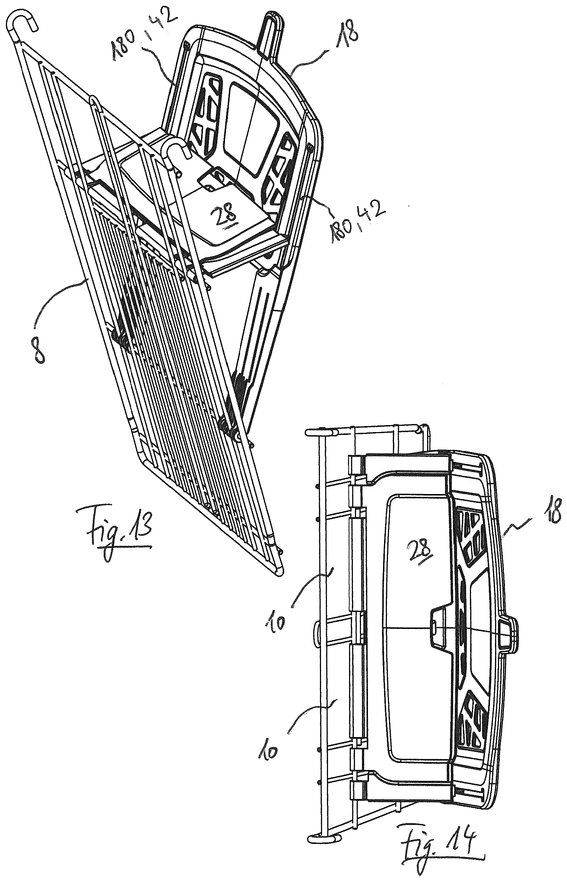

Das Klappenrückenteil 18 ist schalenförmig gebildet. Eine ergonomische z.B. eine leicht konkave Form hat sich als vorteilhaft erwiesen. Dies ist z.B. in Figuren 8 und 14 dargestellt.

Wie z.B. in Figur 13 und den fortfolgenden Figuren dargestellt, ist das Klappenrückenteil 18 mit weiteren Aufnahmen 42 versehen, die als Durchbrüche 180 ausgeführt sind. Die Sitzklappe 12 ist mit zwei Zapfen 122 versehen, die entlang der weiteren Aufnahmen 42 gleiten können. Die weitere Aufnahme 42 ist auf der rechten und linken Seite des Klappenrückenteils 18 gebildet und vorzugsweise als schlitzförmiger Durchbruch 180 ausgeführt. Die Zapfen 122 sind somit freiliegend.

In einer alternativen Ausführungsform könnte das Klappenteil Zapfen aufweisen, die nicht freiliegend, sondern im Inneren des Klappenrückenteils ausgeführt sind.

Eine zusätzliche Geräuschdämpfung könnte über kleine, vorzugsweise aus einem Kunststoff ausgeführte Dämpfer erzielt werden. Dieser könnte an einer der Verstärkungsrippen, die das Klappenrückenteil, die Sitzklappe oder die Warenfachklappe aufweisen könnte, ortsfest oder wechselbar angebracht sein.

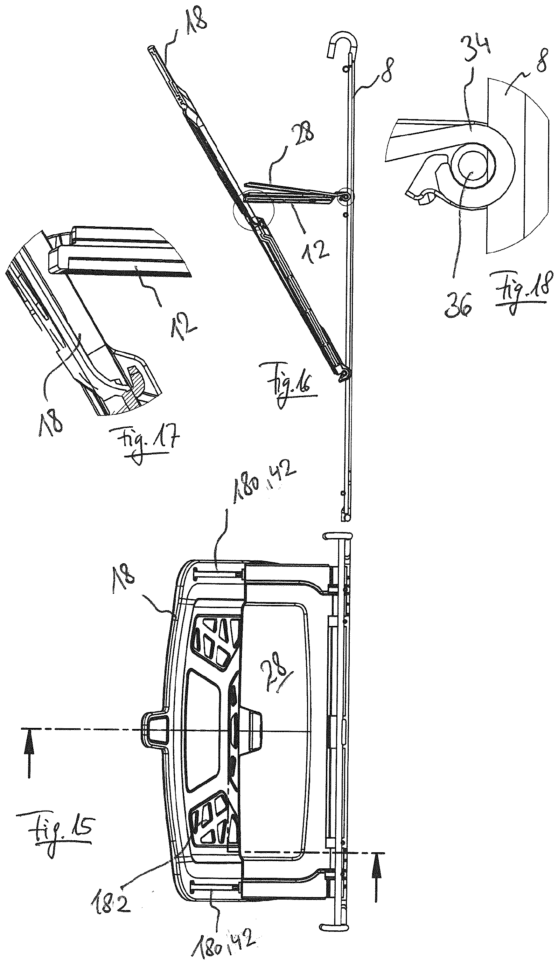

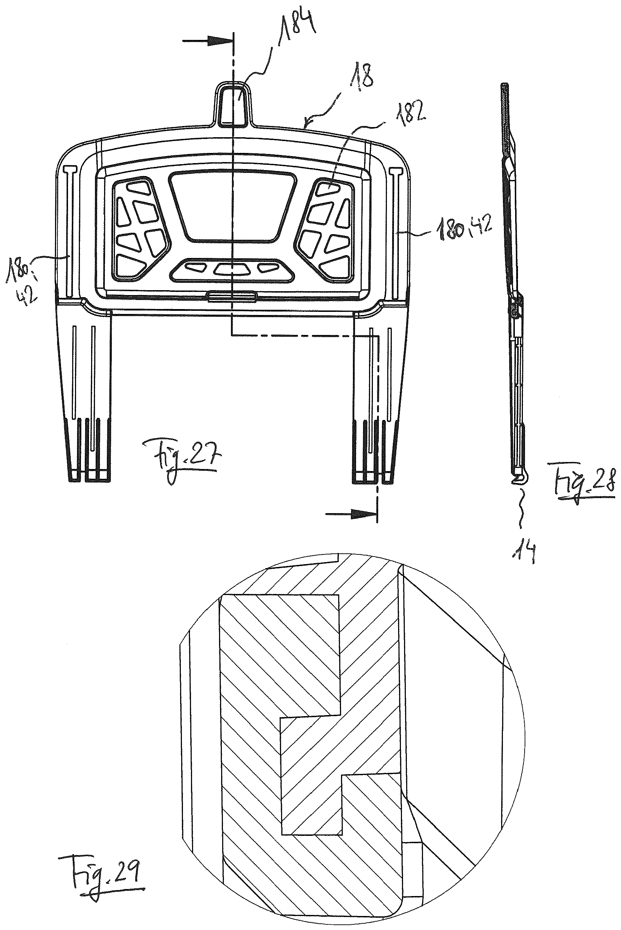

Die Klappenrückwand 18 kann mit weiteren Durchbrüchen 182 versehen sein. Dies vermindert den Materialeinsatz. Die weiteren Durchbrüche 182 können, wie u.a. z.B. in den Figuren 15 und 27 dargestellt, in drei Bereichen vorgesehen sein. Die Ausgestaltung der weiteren Durchbrüche 182 kann beispielsweise drei, vier oder mehreckig sein. In einem Bereich kann eine Vielzahl an weiteren Durchbrüchen 182 vorgesehen sein, eine Anzahl zwischen drei und sechs weiteren Durchbrüche 182 hat sich als vorteilhaft erwiesen. Wie u.a. aus Figur 27 ersichtlich, sind die weiteren Durchbrüche 182 verteilt auf zwei seitliche Bereiche und einen unteren Bereich der Klappenrückwand 18. Alternative Positionen sind denkbar.

Das Klappenrückenteil 18 kann aus einem PA oder einem PP hergestellt sein. Denkbar ist auch der Einsatz von zwei verschiedenen Kunststoffen. Hierbei kann als einer der Kunststoffe ferner ein glasfaserverstärkter Kunststoff Einsatz finden.

Das Klappenrückenteil 18 wird aus einem Kunststoff in einem Produktionszyklus aus zwei unterschiedlichen Materialien hergestellt. Ein 2-Komponenten- Spritzgussverfahren bietet sich vorzugsweise hierfür an. Die beiden Kunststoffmaterialien können sich hierbei auch farblich unterscheiden. Auch besteht die Möglichkeit eine unterschiedliche Haptik zu erzielen. Weiterhin kann durch den Einsatz bestimmter Kunststoffe die nötige Steifigkeit für das Klappenrückenteil 18 entsprechend ausgeführt werden. In Figur 29 ist exemplarisch ein möglicher Verbindungsbereich zweier Materialien im Detail darstellt. Hierbei kann die Unterscheidung auch darin liegen, dass unterschiedliche Farben Einsatz finden.

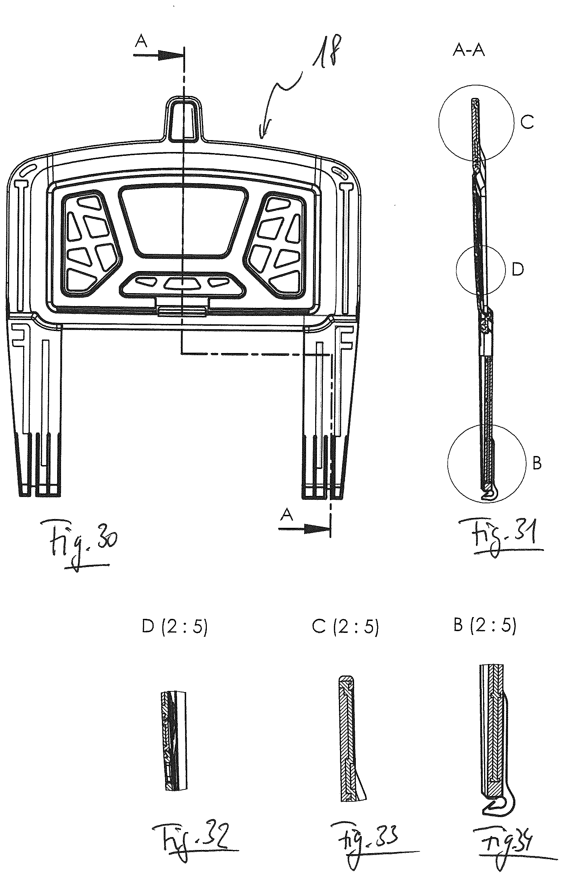

Die Figuren 30 bis 34 zeigen weitere mögliche Verbindungsbereiche zweier Materialien. Je nach Ausführungsform des Klappenrückenteils 18 ist die Form bei der Verwendung zweier Kunststoffe entsprechend auszuführen. Hierbei ergeben sich fertigungstechnisch vorteilhafte Abstufungen oder Einbuchtungen bzw. Ausnehmungen, die das Einbringen eines zweiten Werkstoffs ermöglichen und eine dauerhafte mechanische Verbindung gewährleisten.

In einer anderen Ausführungsform werden die beiden Bauteile z.B. mittels eines Klebstoffes dauerhaft fixiert.

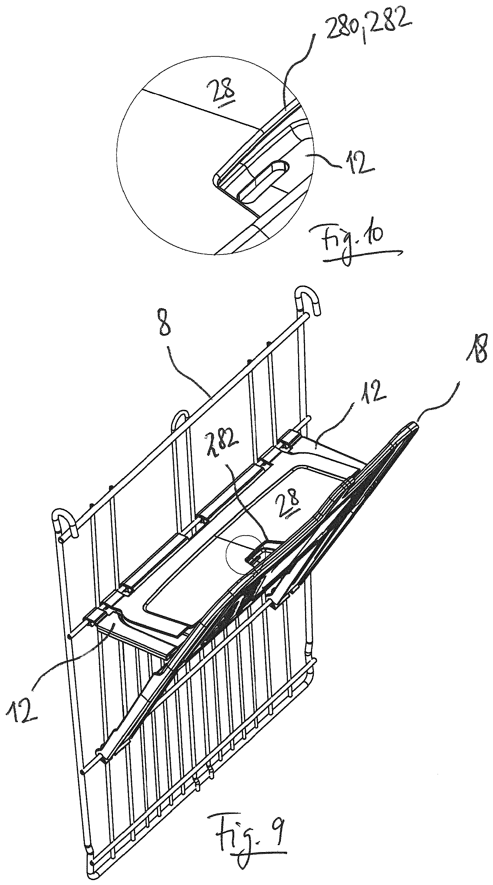

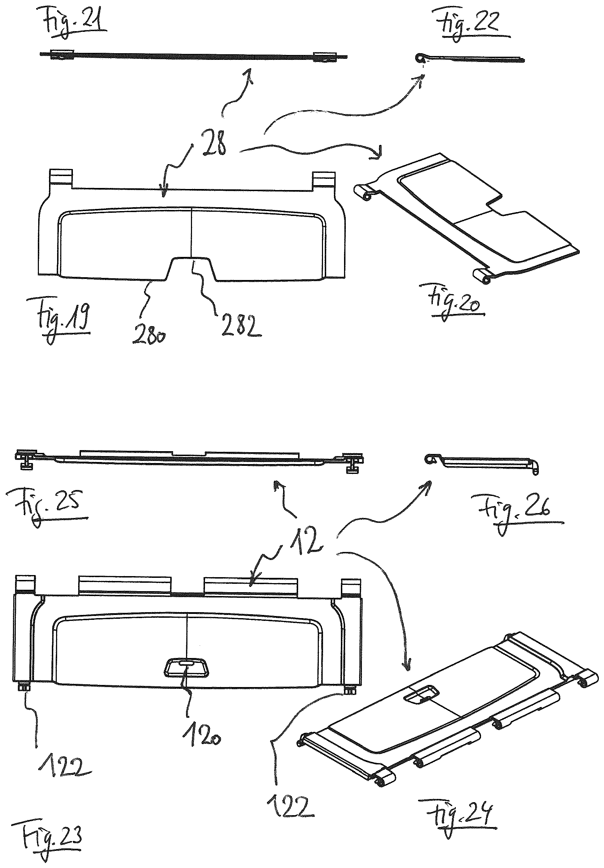

Die Warenfachklappe 28 weist an der freien Außenseite 280 eine Griffmulde 282 auf. Dies ist u.a. den Figuren 9, 10, 13, 14, 19 und 20 zu entnehmen.

Auch die Sitzklappe 12 ist mit einer Öffnung 120 versehen. Dies geht z.B. aus den Figuren 9, 10, 13, 14, 23, 24 hervor. Eine oval förmige Öffnung 120 hat sich als sinnvoll erwiesen. Ferner macht es Sinn um die Öffnung 120 herum eine Abstufung vorzusehen; Flüssigkeiten, wie z.B. Regenwasser, können sich hierin bereits sammeln bevor sie durch die Öffnung 120 auf einfache Art ablaufen können.

Die Warenfachklappe 28 ist kleiner ausgeführt als die Sitzklappe 12. Insbesondere hat es sich als vorteilhaft erwiesen, dass in dem Bereich, in dem die Warenfachklappe 28 aufliegt, eine Abstufung in der Sitzklappe 12 vorgesehen ist, so dass eine bündige Oberfläche gegeben ist, wenn ein Kind die Sitzklappe 12 nutzt.

Ein Griffhorn 184, wie z.B. in Figur 27 dargestellt, hat sich als sinnvoll erwiesen. Hierdurch kann das Klappenrückteil 18 auf bequeme Weise aufgeklappt werden.

### Bezugszeichenliste

- 2: Transportwagen, Wagen
- 4: Korb
- 6: Korbklappe
- 7: Griff
- 8: Klappenvorderteil
- 10: Beinöffnungen
- 12: Sitzklappe
- 120: Öffnung
- 122: Zapfen
- 14: Scharniergelenke (des Klappenvorderteils 8)
- 16: Achse
- 18: Klappenrückenteil
- 180: Durchbruch
- 182: weiterer Durchbruch
- 184: Griffhorn
- 20: Nut
- 22: Schnappspange
- 24: Engstellen
- 26: Querschnitt (des Nutgrunds)
- 28: Warenfachklappe
- 280: Außenseite
- 282: Griffmulde
- 30: Seitenwände
- 32: Verstärkungsrippen
- 33: unterste Verstärkungsrippe
- 34: Scharniergelenke (der Sitzklappe 12 und Warenfachklappe 28)
- 36: Achse
- 38: Versteifungssicke
- 40: Aufnahmen
- 42: weitere Aufnahme
- 50: Magnet

## Patentansprüche

1. Stapelbarer Transportwagen (2) mit einem Korb (4) mit einer in das Korbinnere schwenkbaren Korbklappe (6), die
- ein Klappenvorderteil (8) mit Beinöffnungen (10) für einen Kindersitz und
- eine Sitzklappe (12) und
- ein mittels Scharniergelenken (14) um eine Achse am Klappenvorderteil (8) schwenkbar gelagerten Klappenrückenteil (18)
aufweist, die in der nicht in das Korbinnere geschwenkten Position beweglich sind zwischen einer Stauposition und einer Sitzposition, in welcher Bereiche des Klappenrückenteils (18) eine Rückenlehne, und Bereiche der Sitzklappe (12) eine Sitzfläche eines Kindersitzes bilden,
zur Montage der Scharniergelenke (14) das Klappenrückenteil (18) sich auf eine Achse (16) am Klappenvorderteil (8) schnappen lässt,
**dadurch gekennzeichnet, dass**
die Achse (16) in einer Nut (20) durch Engstellen (24) am Ausgang der Nut (20) gesichert ist,
wobei die Nut (20) jeweils von einer Schnappspange (22) überdacht ist und wobei weiterhin die Schnappspange (22) eine Öffnung zur Aufnahme eines senkrechten Drahtes des Klappenvorderteils (8) aufweist.

2. Transportwagen nach Anspruch 1, **dadurch gekennzeichnet, dass** eine Warenfachklappe (28), die in der nicht in das Korbinnere geschwenkten Position der Korbklappe (6) gegen das Klappenvorderteil (8) beweglich ist und dort die Beinöffnungen (10) verdeckt.

3. Transportwagen nach Anspruch 2, **dadurch gekennzeichnet, dass** das Klappenrückenteil (18) und/oder die Sitzklappe (12) und/oder die Warenfachklappe (28) aus Kunststoff ist.

4. Transportwagen nach einem der vorhergehenden Ansprüche, **dadurch gekennzeichnet, dass** das Klappenvorderteil (18) aus Stahldraht hergestellt ist.

5. Transportwagen nach einem der vorhergehenden Ansprüche wenn abhängig von Anspruch 2 oder 3, **dadurch gekennzeichnet, dass** die Sitzklappe (12) und/oder die Warenfachklappe (28) mittels weiteren Scharniergelenken (34) um eine weitere Achse (36) am Klappenvorderteil (8) schwenkbar gelagert sind und dass zur Montage der weiteren Scharniergelenke (34) die Sitzklappe (12) und/oder die Warenfachklappe (28) sich auf die weitere Achse (36) am Klappenvorderteil (8) schnappen lassen.

6. Transportwagen nach einem der vorhergehenden Ansprüche, **dadurch gekennzeichnet, dass** das Klappenrückenteil (18) eine Versteifungssicke (38) entlang dem oberen Rand der Rückenlehne aufweist.

7. Transportwagen nach einem der vorhergehenden Ansprüche, **dadurch gekennzeichnet, dass** das Klappenrückenteil (18) zwei Aufnahmen (40) für einen Kindersitzgurt aufweist.

8. Transportwagen nach einem der vorhergehenden Ansprüche, **dadurch gekennzeichnet, dass** das Klappenrückenteil (18) aus einem 2-Komponenten-Spritzguss hergestellt ist.

9. Transportwagen nach einem der vorhergehenden Ansprüche wenn abhängig von Anspruch 2 oder 3, **dadurch gekennzeichnet, dass** die Sitzklappe (12) und die Warenfachklappe (28) aus einem 1-Komponenten Spritzguss hergestellt ist.

10. Transportwagen nach einem der vorhergehenden Ansprüche, **dadurch gekennzeichnet, dass** das Klappenrückenteil (18) wenigstens einen Magneten (50) aufweist.

11. Transportwagen nach einem der vorhergehenden Ansprüche, **dadurch gekennzeichnet, dass** das Klappenrückenteil (18) wenigstens einen, vorzugsweise zwei Durchbrüche (180) aufweist.

12. Transportwagen nach Anspruch 11, **dadurch gekennzeichnet, dass** das Klappenrückenteil (18) weitere Durchbrüche (182) aufweist.

13. Transportwagen nach Anspruch 11, **dadurch gekennzeichnet, dass** der wenigstens eine Durchbruch (180) als weitere Aufnahme (42) für einen Zapfen (122) ausgeführt ist.

14. Transportwagen nach Anspruch 13, **dadurch gekennzeichnet, dass** der Zapfen (122) Teil der Sitzklappe (12) ist.

## Claims

1. Stackable transport trolley (2) having a basket (4) with a basket flap (6), which can be pivoted into the interior of the basket and has
- a flap front part (8) with leg openings (10) for a child seat, and
- a seat flap (12), and
- a flap back part (18), which is mounted on the flap front part (8) such that it can be pivoted about a spindle by means of hinge joints (14),
and, when not in a position in which they have been pivoted into the interior of the basket, the flap front part, seat flap and flap back part can be moved between a stowage position and a sitting position, in which regions of the flap back part (18) form a backrest, and regions of the seat flap (12) form a sitting surface, of a child seat,
and, for the purpose of fitting the hinge joints (14), the flap back part (18) can be snap-fitted onto a spindle (16) on the flap front part (8),
**characterized in that**
the spindle (16) is secured in a groove (20) by narrowings (24) at the outlet of the groove (20),
wherein the groove (20) is covered over at the top in each case by a snap-fit clip (22),
and wherein it is also the case that the snap-fit clip (22) has an opening for receiving a vertical wire of the flap front part (8).

2. Transport trolley according to Claim 1, **characterized in that** a product-compartment flap (28), which, when the basket flap (6) is not in a position in which it has been pivoted into the interior of the basket, can be moved in relation to the flap front part (8) and covers the leg openings (10) there.

3. Transport trolley according to Claim 2, **characterized in that** the flap back part (18) and/or the seat flap (12) and/or the product-compartment flap (28) are/is made of plastic material.

4. Transport trolley according to one of the preceding claims, **characterized in that** the flap front part (18) is produced from steel wire.

5. Transport trolley according to one of the preceding claims, if dependent on Claim 2 or 3, **characterized in that** the seat flap (12) and/or the product-compartment flap (28) are mounted on the flap front part (8) such that they can be pivoted about a further spindle (36) by means of further hinge joints (34), and **in that**, for the purpose of fitting the further hinge joints (34), the seat flap (12) and/or the product-compartment flap (28) can be snap-fitted onto the further spindle (36) on the flap front part (8).

6. Transport trolley according to one of the preceding claims, **characterized in that** the flap back part (18) has a stiffening bead (38) along the upper edge of the backrest.

7. Transport trolley according to one of the preceding claims, **characterized in that** the flap back part (18) has two mounts (40) for a child-seat belt.

8. Transport trolley according to one of the preceding claims, **characterized in that** the flap back part (18) is produced from 2-component injection moulding.

9. Transport trolley according to one of the preceding claims, if dependent on Claim 2 or 3, **characterized in that** the seat flap (12) and the product-compartment flap (28) is produced from single-component injection moulding.

10. Transport trolley according to one of the preceding claims, **characterized in that** the flap back part (18) has at least one magnet (50).

11. Transport trolley according to one of the preceding claims, **characterized in that** the flap back part (18) has at least one aperture, preferably two apertures (180).

12. Transport trolley according to Claim 11, **characterized in that** the flap back part (18) has further apertures (182).

13. Transport trolley according to Claim 11, **characterized in that** the at least one aperture (180) is configured in the form of a further mount (42) for a stub (122) .

14. Transport trolley according to Claim 13, **characterized in that** the stub (122) is part of the seat flap (12).

## Revendications

1. Chariot de transport (2) empilable avec un panier (4) avec un volet de panier (6) pouvant pivoter à l'intérieur du panier, qui présente
- une partie avant de volet (8) avec des ouvertures pour les jambes (10) pour un siège pour enfant et
- un volet de siège (12) et
- une partie dorsale de volet (18) montée pivotante autour d'un axe sur la partie avant de volet (8) au moyen d'articulations à charnière (14),
qui, dans la position non pivotée à l'intérieur du panier, sont mobiles entre une position de rangement et une position d'assise, dans laquelle des zones de la partie dorsale de volet (18) forment un dossier et des zones du volet de siège (12) forment une surface d'assise d'un siège pour enfant,
pour le montage des articulations à charnière (14), la partie dorsale de volet (18) pouvant s'encliqueter sur un axe (16) sur la partie avant de volet (8),
**caractérisé en ce que**
l'axe (16) est bloqué dans une rainure (20) par des passages étroits (24) à la sortie de la rainure (20),
la rainure (20) étant recouverte respectivement par une barrette d'encliquetage (22),
et la barrette d'encliquetage (22) présentant en outre une ouverture pour recevoir un fil métallique vertical de la partie avant de volet (8).

2. Chariot de transport selon la revendication 1, **caractérisé en ce qu'**un volet de compartiment à marchandises (28), qui est mobile contre la partie avant de volet (8) dans la position non pivotée à l'intérieur du panier du volet de panier (6), et y recouvre les ouvertures pour les jambes (10).

3. Chariot de transport selon la revendication 2, **caractérisé en ce que** la partie dorsale de volet (18) et/ou le volet de siège (12) et/ou le volet de compartiment à marchandises (28) sont en plastique.

4. Chariot de transport selon l'une quelconque des revendications précédentes, **caractérisé en ce que** la partie avant de volet (18) est fabriquée en fil d'acier.

5. Chariot de transport selon l'une quelconque des revendications précédentes lorsqu'elles dépendent de la revendication 2 ou 3, **caractérisé en ce que** le volet de siège (12) et/ou le volet de compartiment à marchandises (28) sont montés pivotants autour d'un axe supplémentaire (36) sur la partie avant de volet (8) au moyen d'articulations à charnière supplémentaires (34) et **en ce que** pour le montage des articulations à charnière supplémentaires (34), le volet de siège (12) et/ou le volet de compartiment à marchandises (28) peuvent s'encliqueter sur l'axe supplémentaire (36) sur la partie avant de volet (8).

6. Chariot de transport selon l'une quelconque des revendications précédentes, **caractérisé en ce que** la partie dorsale de volet (18) présente une moulure de renforcement (38) le long du bord supérieur du dossier.

7. Chariot de transport selon l'une quelconque des revendications précédentes, **caractérisé en ce que** la partie dorsale de volet (18) présente deux logements (40) pour une ceinture de siège pour enfant.

8. Chariot de transport selon l'une quelconque des revendications précédentes, **caractérisé en ce que** la partie dorsale de volet (18) est fabriquée à partir d'un moulage par injection à 2 composants.

9. Chariot de transport selon l'une quelconque des revendications précédentes lorsqu'elles dépendent de la revendication 2 ou 3, **caractérisé en ce que** le volet de siège (12) et le volet de compartiment à marchandises (28) sont fabriqués à partir d'un moulage par injection à 1 composant.

10. Chariot de transport selon l'une quelconque des revendications précédentes, **caractérisé en ce que** la partie dorsale de volet (18) présente au moins un aimant (50) .

11. Chariot de transport selon l'une quelconque des revendications précédentes, **caractérisé en ce que** la partie dorsale de volet (18) présente au moins une, de préférence deux percées (180).

12. Chariot de transport selon la revendication 11, **caractérisé en ce que** la partie dorsale de volet (18) présente des percées supplémentaires (182).

13. Chariot de transport selon la revendication 11, **caractérisé en ce que** l'au moins une percée (180) est conçue sous forme de logement supplémentaire (42) pour un pivot (122).

14. Chariot de transport selon la revendication 13, **caractérisé en ce que** le pivot (122) fait partie du volet de siège (12) .
